# EUROPEAN PATENT SPECIFICATION

(11) **EP 3 540 722 B1**
(45) Date of publication and mention of the grant of the patent: **26.02.2025**
(21) Application number: 18161832.3
(22) Date of filing: 14.03.2018
(51) Int. Cl.: H04B 10/116, G06F 3/14, G09G 5/02

(54) **METHOD AND APPARATUS FOR ENCODING VISIBLE LIGHT COMMUNICATION INFORMATION**
VERFAHREN UND VORRICHTUNG ZUR CODIERUNG SICHTBARER LICHTKOMMUNIKATIONSINFORMATIONEN
PROCÉDÉ ET APPAREIL PERMETTANT DE CODER DES INFORMATIONS DE COMMUNICATION DE LUMIÈRE VISIBLE

(43) Date of publication of application: 18.09.2019
(73) Proprietor: Vestel Elektronik Sanayi ve Ticaret A.S., 45030 Manisa (TR)
(72) Inventor: ÍKÍZLER, Anil, 45030 Manisa (TR)
(74) Representative: Page White Farrer

(56) References cited:
- WO-A2-2016/111823
- US-A1- 2014 184 914

## Description

### Technical Field

The present disclosure relates to an apparatus and a method for encoding visible light information.

### Background

Visible light communication is a data communication technique which uses visible light (ranging from around 390nm to 700nm) to convey data. Visible light communication is possible over a multitude of electronic items that comprise a screen and that can be imaged using a camera. Examples of such electronic items include televisions, personal computers, smartphones, and smart watches, and screens or display devices generally. In one example, a video stream can be encoded with visible light information, thereby transmitting the visible light information when the encoded video is output at the screen of an electronic device.

WO2016/111823A2 describes a light communication method and system wherein messages are transmitted via colour code flashes.

US2014/018914A1 describes method in which a visible light communication signal can be appropriately transmitted.

### Summary

According to a first aspect disclosed herein, there is provided a method for encoding visible light communication information, the method comprising:
encoding visible light communication information in an image frame, wherein the values of pixels for the visible light communication information in the encoded image frame are based on a first function; and
calibrating the encoded image frame based on a second function which is dependent on a colour temperature setting, wherein the first function is the inverse of the second function.

The first function and the second function may be non-linear.

Encoding visible light communication information in an image frame may comprise:
modulating the values of pixels for the visible light communication information; and
replacing the modulated values of pixels for the visible light communication information with replacement values, wherein the replacement values are obtained by applying first gains stored in a first look-up table to the modulated values of pixels for the visible light communication information.

Calibrating the encoded image frame based on a second function may comprise:
replacing values of pixels of the encoded image frame with replacement values, wherein the replacement values are obtained by applying second gains stored in a second look-up table to the values of pixels of the encoded image frame.

The first gains may be obtained by inverting the second gains.

The method may comprise:
displaying the encoded image frame on a screen.

According to a second aspect there is provided an apparatus for encoding visible light communication information, the apparatus comprising a processor constructed and arranged to:
encode visible light communication information in an image frame, wherein the values of pixels for the visible light communication information in the encoded image frame are based on a first function; and
calibrate the encoded image frame based on a second function which is dependent on a colour temperature setting, wherein the first function is the inverse of the second function.

The first function and the second function may be non-linear.

Encoding visible light communication information in an image frame may comprise:
modulating the values of pixels for the visible light communication information; and
replacing the modulated values of pixels for the visible light communication information with replacement values, wherein the replacement values are obtained by applying first gains stored in a first look-up table to the modulated values of pixels for the visible light communication information.

Calibrating the encoded image frame based on a second function may comprise:
replacing values of pixels of the encoded image frame with replacement values, wherein the replacement values are obtained by applying second gains stored in a second look-up table to the values of pixels of the encoded image frame.

The first gains may be obtained by inverting the second gains.

The processor may be constructed and arranged to:
cause the encoded image frame to be sent to a screen for display.

The apparatus may comprise a mobile phone, a smart phone, a laptop computer, a tablet computer, a desktop computer, a television set, a projector, a smart watch or a digital signage unit.

The invention relates to a method and an apparatus as set forth in the claims.

### Brief Description of the Drawings

To assist understanding of the present disclosure and to show how embodiments may be put into effect, reference is made by way of example to the accompanying drawings in which:
Figure 1 shows schematically an example of an apparatus according to an embodiment disclosed herein;
Figures 2 and 3 show schematically an example of an encoded image frame according to an embodiment disclosed herein;
Figure 4 shows schematically examples of graphs illustrating the relation between the colour temperature of a screen and the colour hue distribution on the screen according to an embodiment disclosed herein;
Figure 5 shows schematically an example of a diagram of a system according to an embodiment disclosed herein; and
Figure 6 shows schematically an example of a diagram of a method according to an embodiment disclosed herein.

### Detailed Description

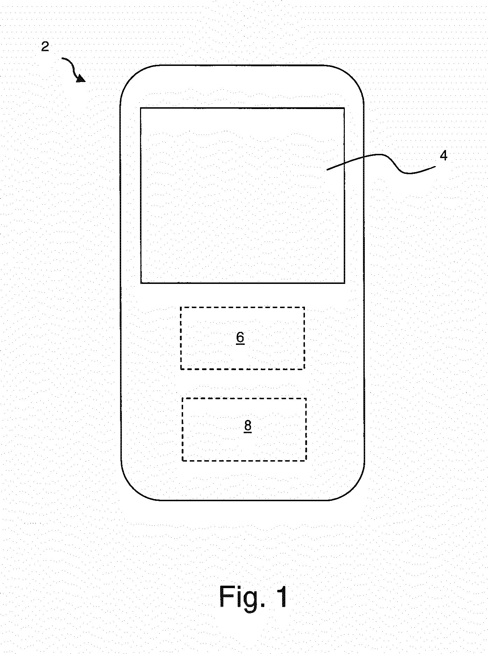

Figure 1 shows schematically an example of an apparatus 2 according to an embodiment. The apparatus 2 may be a mobile phone (e.g. a smart phone), a laptop computer, a tablet computer, a desktop computer, a television set, a projector, a smart watch, a display panel or wall such as for so-called signage, etc.

The apparatus 2 comprises a screen 4. The screen 4 may be a liquid crystal display, an (inorganic or organic) light emitting diode display, a plasma display, a projector screen, etc. The screen 4 has a colour temperature. The colour temperature of a screen may conventionally refer to the temperature of an ideal black-body radiator that radiates light of a colour comparable to that of the screen. The colour temperature of the screen 4 may be expressed in Kelvin (K). Here, the colour temperature of the screen 4 may be adjusted by an end user. For example, the colour temperature may be set to 6500K (e.g. to comply with the standard illuminant D65), 7500K, 9300K, 1200k or any other value selected by the end user. In an embodiment, the screen 4 may be configured to display a user interface (e.g. slider, editable field, etc.) via which the colour temperature may be adjusted by the end user.

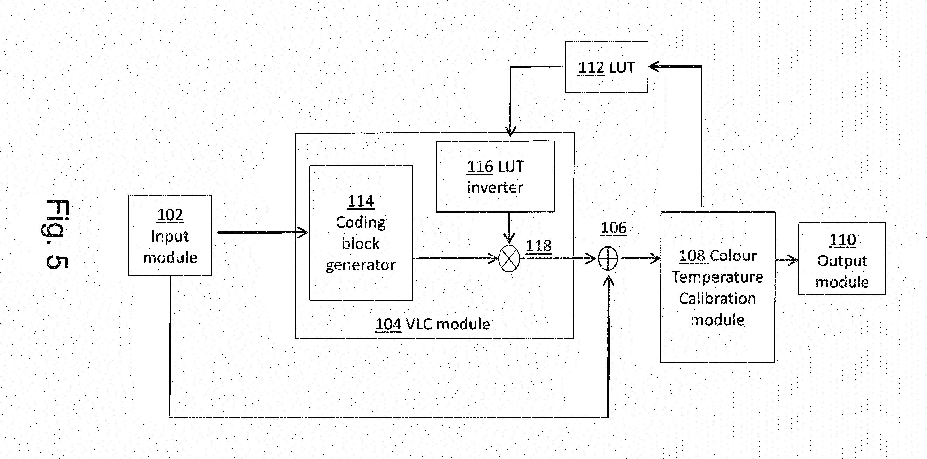

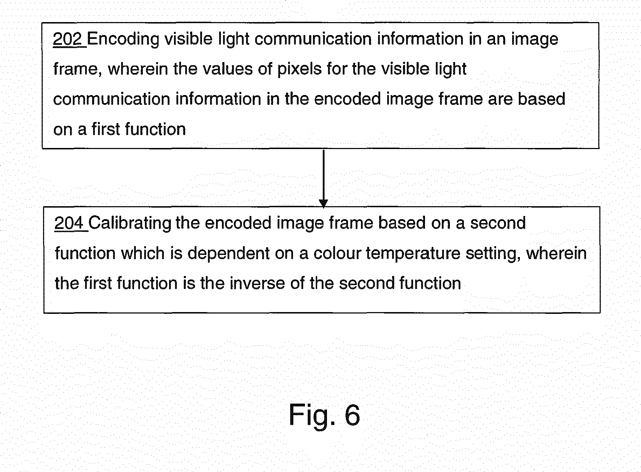

The apparatus 2 comprises a memory unit 6 and a processor unit 8. The memory unit 6 stores instructions which when executed by the processing unit 8 allows the processing unit 8 to implement a system according to Figure 5 and/or a method according to Figure 6 (discussed in further detail below).

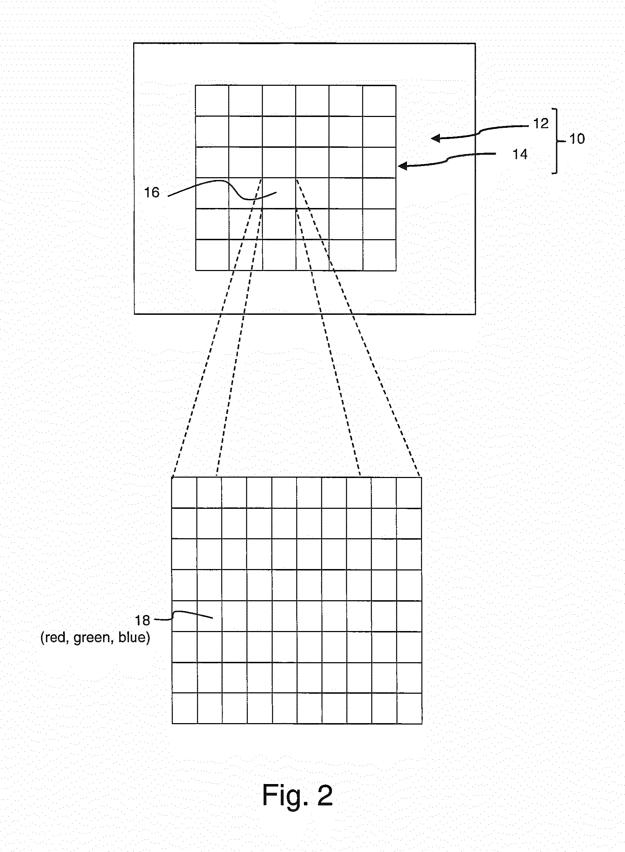

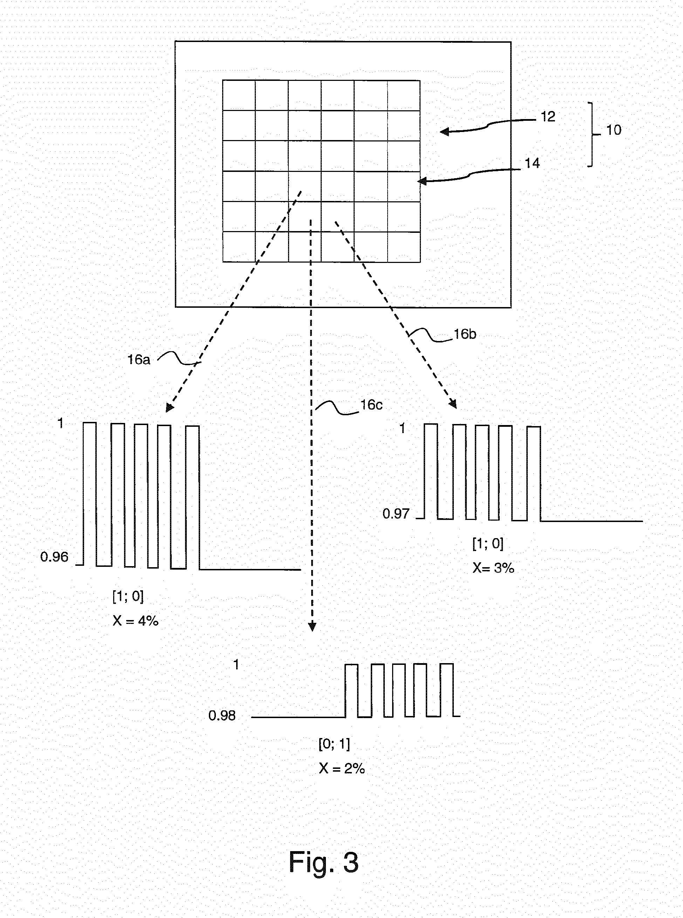

Figure 2 and Figure 3 show schematically an encoded image frame 10. The image frame 10 comprises a non-coding area 12 and a coding area 14. The coding area 14 comprises a plurality of coding blocks 16 to encode respective visible light communication information. The size and number of coding blocks 16 in the coding area 14 is adjustable.

Each coding block 16 comprises a plurality of pixels 18. Each pixel 18 comprises a red channel, a blue channel, a green channel and optionally an alpha channel. As a result, each pixel 18 is characterized by a plurality of properties such as a luminance and a colour hue.

The luminance and colour hue of a pixel 18 are indirectly defined by the red channel, the green channel and the blue channel.

Visible light communication information may be encoded in a coding block 16 by modulating the value of the red channel, blue channel and green channel and therefore the value of a property of each pixel 18 of the coding block 16 in consecutive image frames. The modulation is typically a modulation in amplitude, in frequency or in phase based on the visible light communication information to be encoded.

In the following, a modulation of colour hue in amplitude is discussed in reference to Figure 3.

When the visible light communication information comprises a logical '0', the value of the property of each pixel 18 of the coding block 16 is set to 100-X% of an original value of the property in consecutive image frames 10. The original value of the property is the value of the property defined by the red channel, the green channel, and the blue channel of the pixel 18 in the stored image frame 10 (as opposed to the displayed image frame). X is a number representing an amplitude shift of the modulation.

When the visible light communication information comprises a logical '1', the value of the property of each pixel 18 of the coding block 16 is alternatively set to 100% or 100-X% of the original value of the property in consecutive image frames 10.

For example, visible light communication information [1; 0] is to be encoded by a coding block 16a. First, the value of the colour hue of each pixel 18 of the coding block 16a is set to 96% of the original value in consecutive image frames. Then, the value of the colour hue of each pixel 18 of the coding block 16a is alternatively set to 100% or 96% of the original value in subsequent consecutive image frames 10.

Visible light communication information [1; 0] is to be encoded by a coding block 16b. First, the value of the colour hue of each pixel 18 of the coding block 16b is set to 97% of the original value in consecutive image frames. Then, the value of the colour hue of each pixel 18 of the coding block 16b is alternatively set to 100% or 97% of the original value in subsequent consecutive image frames 10.

Visible light communication information [0; 1] is to be encoded by a coding block 16c. First, the value of the colour hue of each pixel 18 of the coding block 16c is set to 98% of the original value in consecutive image frames. Then, the value of the colour hue of each pixel 18 of the coding block 16c is alternatively set to 100% or 98% of the original value in subsequent consecutive image frames.

It has been noted that a colour temperature setting of the screen 4 may affect the performance of colour hue modulation. Indeed, before being displayed on the screen 4, a colour temperature calibration function (sometimes referred as white point calibration function) is typically applied to image frames that are to be displayed, which here will include the encoded image frame 10. The colour temperature calibration function modifies the colour hue distribution of the pixels of the image frames and replaces the values of the pixels of the image frames with replacement values for the pixels.

For example, the replacement values of pixels are obtained by applying (e.g. multiplying) gains (e.g. number comprised between 0 and 1) to the red, green and blue channels of the pixels of the image frame. The colour temperature calibration function may be non-linear. The colour temperature calibration function may be a curve (e.g. polynomial function). That is, pixels with different red, green and blue channels may be applied different gains.

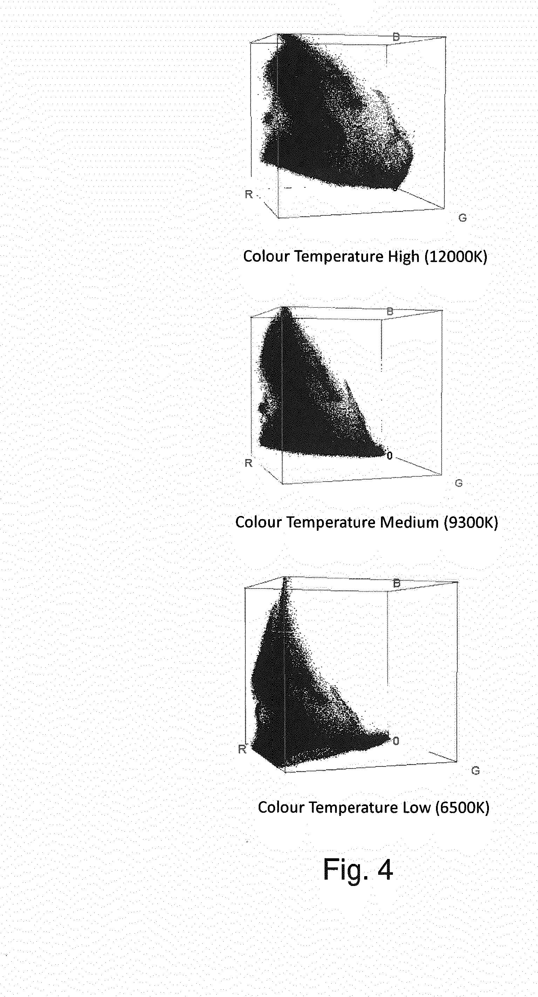

A problem with a colour temperature calibration function associated with a colour temperature is that it affects the colour hue distribution of the encoded image frame 10. As can be seen on Figure 4, the lower the colour temperature of the screen 4, the more the colour hue distribution is shifted toward the red. Alternatively, the greater the colour temperature of the screen 4, the more the colour hue distribution is shifted toward the blue. Accordingly, applying the colour temperature calibration function may limit the capacity to perform visible light communication using colour hue modulation because fewer colour hues may be displayed by the screen 4. This may increase the error rate.

Moreover, when the colour temperature calibration function is a non-linear function, the colour hue distribution of the encoded image frame 10 is non-linearly affected (e.g. the gains applied to the values of some pixels may be greater than gains applied to the values of other pixels). Therefore, there may be some distortion of the visible light communication information encoded in the encoded image frame 10.

Figure 5 shows schematically an example of a system 100 according to an embodiment of the present disclosure. The system 100 may for example be implemented by the memory unit 6 and the processor unit 8. It will however be understood that the system 100 may be implemented in other suitable manners.

The system 100 comprises an input module 102 configured to receive an image frame. The image frame may be for example part of a sequence of image frames of a video signal.

The system 100 comprises a visible light communication module 104 configured to select a coding block in an image frame from the input module 102 and encode visible light communication information in the coding block.

The system 100 comprises an operator 106 configured to combine the coding block from the visible light communication module 104 with the original image frame from the input module 102 to form an encoded image frame 10. For example, an original image frame from the input module 102 is modified so that the coding block from the visible light communication module 104 replaces a corresponding block of the original image frame.

The system 100 comprises a colour temperature calibration module 108 configured to calibrate image frames prior to display on a screen, including an encoded image frame from the operator 106 based on a colour temperature setting of the screen 4.

The system 100 comprises an output module 110 configured to output image frames, including an encoded image frame, from the colour temperature calibration module 108 to the screen 4.

The colour temperature calibration module 108 may be configured to apply a colour temperature calibration function to the image frames based on a desired colour temperature setting. In this way, the pixels of the combined image frame are replaced with replacement pixels.

In an implementation, the colour temperature calibration module 108 uses one or more look-up tables (LUT) 112. Each look-up table 112 is associated with a respective colour temperature calibration function and with a respective colour temperature setting of the image to be displayed on the screen 4 (e.g. 6500K, 7500K, 9300K or 12000K). Each look-up table 112 may be stored in the memory unit 6 during manufacture by the manufacturer or after purchase by the end user. Each look-up table 112 stores gains to be applied (i.e. multiplied) to the red, green and blue channels of the pixels of an encoded image frame.

As discussed above, a colour temperature calibration function may be non-linear. That is, the look-up table 112 may store different gains to be applied to different pixels with different red, green and blue channels as shown illustratively by way of example in the table below.

| RGB values for pixels of the encoded image frame | Gains |
|---|---|
| (0, 0, 0) | g1 |
| (0, 125, 125) | g2 |
| (125, 125, 125) | g3 |

### (Look-up table 112 when the colour temperature setting is 6500K)

A colour temperature calibration function may be a curve (e.g. polynomial function).

The visible light communication module 104 comprises a coding block generator 114 configured to select a coding block within an image frame from the input module and modulate the red, green and blue values of pixels the coding block as described in reference to Figures 2 and 3.

The visible light communication module 104 may comprise a look-up table inverter 116 configured to dynamically invert a look-up table 112 used by the colour temperature calibration module 108. The look-up table inverter 116 forms an inverted look-up table 112 and stores the inverted look-up table 112 in the memory unit 6.

For example, the look-up table inverter 116 may dynamically receive the look-up table 112 used by the colour temperature calibration module 108 and may invert each gain of the look-up table 112 to form the inverted look-up table 112. The look-up table inverter 116 may then store the inverted look-up table 112 in the memory unit 6. More specifically, if a gain for a pixel with red, green and blue channels is X in the look-up table 112, the gain for the same pixel with the same red, green and blue channels may be 1/X in the inverted look-up table 112 as shown illustratively by way of example in the table below.

| RGB values for pixels of the coding block | Gains |
|---|---|
| (0, 0, 0) | 1/g1 |
| (0, 125, 125) | 1/g2 |
| (125, 125, 125) | 1/g3 |

### (Inverted look-up table 112 when the colour temperature setting is 6500K)

It will be understood that when the colour temperature setting of the screen 4 is re-adjusted and set to a new colour temperature, the inverted look-up table 112 may be deleted from the memory unit 6 and a new inverted look-up table 112 corresponding to the new (current) look-up table 112 used by the colour temperature calibration module 108 may be stored in the memory unit 6. In this way, memory resources may be saved as only one of the possible inverted look-up tables 112 may be stored in the memory 6 as opposed to all of possible inverted look-up tables 112. However, larger computing resources may be required.

The visible light communication module 104 comprises an operator 118 to apply (e.g. multiply) the gains from the inverted look-up table 112 to the values of pixels of the coding block from the coding block generator 114. In this way, the effects of the colour temperature calibration module 108 on the coding block may be anticipated and effectively compensated. As a result, the visible light communication information encoded in the image frame may be less distorted and the error rate may be reduced.

It will be understood that in some embodiments the visible light communication module 104 may not comprise a look-up table inverter 116 and may not dynamically store the inverted look-up tables 112. Instead, the visible light communication module 104 may statically store the inverted look-up tables 112. The inverted look-up tables 112 may be stored in the memory unit 6 during manufacture by the manufacturer or may be subsequently loaded in the memory unit 6 by the end user. In this way, computing resources may be saved as the system 100 may not have to compute an inverted look-up table 112 every time that the colour temperature setting of the screen 4 is adjusted. However, larger memory resources may be required because all of the possible inverted look-up tables 112 may be stored in the memory unit 6 as opposed to only one of the possible inverted look-up tables 112. In other embodiments, some inverted look-up tables 112 may be pre-stored, for example for a number of commonly used colour temperature settings, and the visible light communication module 104 may comprise a look-up table inverter 116 which dynamically provides inverted look-up tables 112 corresponding to other colour temperature settings as necessary.

Figure 6 shows schematically a diagram of an example of a method according to one embodiment. The method may be performed by the system 100 or any other suitable system.

In 202, visible light communication information is encoded in an image frame, wherein the values of pixels for the visible light communication information in the encoded image frame are based on a first function. For example, visible light communication information may be encoded in an image frame by the visible light communication module 104 and the operator 106.

In 204, the encoded image frame is calibrated based on a second function which is dependent on a colour temperature setting. For example, the encoded image frame is calibrated by the colour temperature calibration module 108.

The first function is the inverse of the second function (e.g. f1 = f2⁻¹).

An advantage of the above embodiments is that the effects of the colour temperature calibration module on the visible light communication information in the encoded image frame may be anticipated and compensated. The response of the system 100 may be substantially linear for the visible light communication information in the encoded image frame. As a result, it reduces data errors during transmission whilst maintaining a satisfying viewing experience for the end user. The transmission may be achieved in an energy efficient and low cost apparatus.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method by an electronic device (2) having a screen (4), a memory unit (6) and a processor unit (8) for encoding visible light communication information in image frames of a video signal output on the screen (4), the method comprising:
inputting image frames of the video signal by an input module (102);
encoding (202) visible light communication information in the image frames by a visible light communication module (104), wherein the values of red, green and blue channels of pixels for the visible light communication information in the encoded image frames are based on a first function, wherein encoding visible light communication information in an image frames comprises:
selecting in image frames from the input module (102) coding blocks by a coding block generator (114) within consecutive image frames, each image frame comprising a non-coding area and a coding area, the coding area comprising a plurality of coding blocks, each coding block comprising a plurality of pixels, each pixel comprising a red channel, a blue channel and a green channel;
modulating the values of the red, green and blue channels of pixels of the coding blocks for the visible light communication information in the consecutive image frames; and
replacing by an operator (118) the modulated values of the red, green and blue channels of pixels for the visible light communication information with replacement values, wherein the replacement values are obtained by applying different first gains stored in a first look-up table (116) to the modulated values of the red, green and blue channels of pixels for the visible light communication information, wherein the different first gains stored in the first look-up table (116) are obtained by inverting different second gains stored in a second look-up table (112);
combining by an operator (106) the coding blocks from the visible light communication module (104) with the image frames frames from the input module (102) to form encoded image frames; and
calibrating (204) by a colour temperature calibration module (108) the colour temperature of the encoded image frames based on a second function which is dependent on a colour temperature setting, wherein calibrating the encoded image frames based on the second function comprises:
replacing modulated values of the red, green and blue channels of pixels of the encoded image frames with replacement values, wherein the replacement values are obtained by applying the different second gains stored in a second look-up table (112) to the modulated values of the red, green and blue channels of pixels of the encoded image frames; and
outputting by an output module (110) the encoded image frames to a screen.

2. A method according to claim 1, wherein the modulation is a modulation in amplitude, in frequency or in phase.

3. An electronic device (2) comprising a screen (4), a memory unit (6) and a processor unit (8), an input module (102), an output module (110), an operator (106), a colour temperature calibration module (108), a second look-up table (112), a visible light communication module (104) comprising a block generator (114), an operator (118) and a first look-up table (116) for encoding visible light communication information and arranged to apply the method steps of claim 1.

## Patentansprüche

1. Ein Verfahren durch ein elektronisches Gerät (2) mit einem Bildschirm (4), einer Speichereinheit (6) und einer Prozessoreinheit (8) zur Kodierung von sichtbaren Lichtkommunikationsinformationen in Einzelbildern eines Videosignals, das auf dem Bildschirm (4) ausgegeben wird, wobei das Verfahren umfasst:
Eingeben von Einzelbildern des Videosignals durch ein Eingabemodul (102);
Kodieren (202) von sichtbaren Lichtkommunikationsinformationen in den Einzelbildern durch ein sichtbares Lichtkommunikationsmodul (104), wobei die Werte der roten, grünen und blauen Kanäle der Pixel für die sichtbaren Lichtkommunikationsinformationen in den kodierten Einzelbildern auf einer ersten Funktion basieren, wobei die Kodierung von sichtbaren Lichtkommunikationsinformationen in einem Einzelbildern umfasst:
Auswählen von Kodierungsblöcken in Einzelbildern vom Eingabemodul (102) durch einen Kodierungsblockgenerator (114) innerhalb aufeinanderfolgender Einzelbildern, wobei jedes Einzelbild einen Nicht-Kodierungsbereich und einen Kodierungsbereich umfasst, der Kodierungsbereich eine Vielzahl von Kodierungsblöcken umfasst, jeder Kodierungsblock eine Vielzahl von Pixeln umfasst, jedes Pixel einen roten Kanal, einen blauen Kanal und einen grünen Kanal umfasst;
Modulieren der Werte der roten, grünen und blauen Kanäle der Pixel der Kodierungsblöcke für die sichtbaren Lichtkommunikationsinformationen in den aufeinanderfolgenden Einzelbildern; und
Ersetzen durch einen Operator (118) der modulierten Werte der roten, grünen und blauen Kanäle der Pixel für die sichtbaren Lichtkommunikationsinformationen durch Ersatzwerte, wobei die Ersatzwerte durch Anwendung unterschiedlicher erster Verstärkungen, die in einer ersten Nachschlagetabelle (116) gespeichert sind, auf die modulierten Werte der roten, grünen und blauen Kanäle der Pixel für die sichtbaren Lichtkommunikationsinformationen erhalten werden, wobei die unterschiedlichen ersten Verstärkungen, die in der ersten Nachschlagetabelle (116) gespeichert sind, durch Invertierung unterschiedlicher zweiter Verstärkungen, die in einer zweiten Nachschlagetabelle (112) gespeichert sind, erhalten werden;
Kombinieren durch einen Operator (106) der Kodierungsblöcke aus dem sichtbaren Lichtkommunikationsmodul (104) mit den Einzelbildern vom Eingabemodul (102) zum Bilden kodierter Einzelbilder; und
Kalibrieren (204) durch ein Farbtemperaturkalibrierungsmodul (108) der Farbtemperatur der kodierten Einzelbildern basierend auf einer zweiten Funktion, die von einer Farbtemperatureinstellung abhängt, wobei die Kalibrierung der kodierten Einzelbildern basierend auf der zweiten Funktion umfasst:
Ersetzen der modulierten Werte der roten, grünen und blauen Kanäle der Pixel der kodierten Einzelbildern durch Ersatzwerte, wobei die Ersatzwerte durch Anwendung der unterschiedlichen zweiten Verstärkungen, die in einer zweiten Nachschlagetabelle (112) gespeichert sind, auf die modulierten Werte der roten, grünen und blauen Kanäle der Pixel der kodierten Einzelbildern erhalten werden; und
Ausgeben durch ein Ausgabemodul (110) der kodierten Einzelbildern auf einen Bildschirm.

2. Ein Verfahren nach Anspruch 1, wobei das Modulieren eine Modulation in Amplitude, Frequenz oder Phase ist.

3. Ein elektronisches Gerät (2) umfassend einen Bildschirm (4), eine Speichereinheit (6) und eine Prozessoreinheit (8), ein Eingabemodul (102), ein Ausgabemodul (110), einen Operator (106), ein Farbtemperaturkalibrierungsmodul (108), eine zweite Nachschlagetabelle (112), ein sichtbares Lichtkommunikationsmodul (104) umfassend einen Blockgenerator (114), einen Operator (118) und eine erste Nachschlagetabelle (116) zur Kodierung von sichtbaren Lichtkommunikationsinformationen und angeordnet zur Anwendung der Verfahrensschritte nach Anspruch 1.

## Revendications

1. Procédé effectué par un dispositif électronique (2) ayant un écran (4), une unité de mémoire (6) et une unité de processeur (8) pour le codage d'informations de communication de lumière visible dans des trames d'image d'un signal vidéo sorti sur l'écran (4), le procédé consistant à :
entrer, par un module d'entrée (102), des trames d'image du signal vidéo ;
coder (202), par un module de communication de lumière visible (104), des informations de communication de lumière visible dans les trames d'image, dans lequel les valeurs des canaux rouge, vert et bleu de pixels pour les informations de communication de lumière visible dans les trames d'image codées sont basées sur une première fonction, dans lequel l'étape consistant à coder des informations de communication de lumière visible dans les trames d'image consiste à :
sélectionner, par un générateur de blocs de codage (114), dans des trames d'image provenant du module d'entrée (102), des blocs de codage à l'intérieur de trames d'image consécutives, chaque trame d'image comprenant une zone de non-codage et une zone de codage, la zone de codage comprenant une pluralité de blocs de codage, chaque bloc de codage comprenant une pluralité de pixels, chaque pixel comprenant un canal rouge, un canal bleu et un canal vert ;
moduler les valeurs des canaux rouge, vert et bleu de pixels des blocs de codage pour les informations de communication de lumière visible dans les trames d'image consécutives ; et
remplacer, par un opérateur (118), les valeurs modulées des canaux rouge, vert et bleu de pixels pour les informations de communication de lumière visible par des valeurs de remplacement, dans lequel les valeurs de remplacement sont obtenues en appliquant différents premiers gains stockés dans une première table de consultation (116) aux valeurs modulées des canaux rouge, vert et bleu de pixels pour les informations de communication de lumière visible, dans lequel les différents premiers gains stockés dans la première table de consultation (116) sont obtenus en inversant différents deuxièmes gains stockés dans une deuxième table de consultation (112) ;
combiner, par un opérateur (106), les blocs de codage provenant du module de communication de lumière visible (104) avec les trames d'image provenant du module d'entrée (102), afin de former des trames d'image codées ; et
étalonner (204), par un module d'étalonnage de température de couleur(108), la température de couleur des trames d'image codées sur la base d'une deuxième fonction qui dépend d'un réglage de température de couleur, dans lequel l'étape d'étalonner les trames d'image codées sur la base de la deuxième fonction consiste à :
remplacer des valeurs modulées des canaux rouge, vert et bleu de pixels des trames d'image codées par des valeurs de remplacement, dans lequel les valeurs de remplacement sont obtenues en appliquant les différents deuxièmes gains stockés dans une deuxième table de consultation (112) aux valeurs modulées des canaux rouge, vert et bleu de pixels des trames d'image codées ; et
sortir, par un module de sortie (110), les trames d'image codées sur un écran.

2. Procédé selon la revendication 1, dans lequel la modulation est une modulation d'amplitude, de fréquence ou de phase.

3. Dispositif électronique (2), comprenant un écran (4), une unité de mémoire (6) et une unité de processeur (8), un module d'entrée (102), un module de sortie (110), un opérateur (106), un module d'étalonnage de température de couleur (108), une deuxième table de consultation (112), un module de communication de lumière visible (104) comprenant un générateur de blocs (114), un opérateur (118) et une première table de consultation (116) pour le codage d'informations de communication de lumière visible, et étant agencé pour appliquer les étapes du procédé selon la revendication 1.
